# FASCICULE DE BREVET EUROPEEN

(11) **EP 4 342 799 B1**
(45) Date de publication et mention de la délivrance du brevet: **07.05.2025**
(21) Numéro de dépôt: 23198306.5
(22) Date de dépôt: 19.09.2023
(51) Int. Cl.: B64D 27/40

(54) **ENSEMBLE DE MOTORISATION D'AÉRONEF COMPORTANT UN DISPOSITIF DE REPRISE D'EFFORTS DE POUSSÉE**
MOTORISIERUNGSEINHEIT FÜR EIN FLUGZEUG MIT EINER VORRICHTUNG ZUR AUFNAHME VON SCHUBKRÄFTEN
AIRCRAFT ENGINE ASSEMBLY COMPRISING A THRUST FORCE RECEIVING DEVICE

(30) Priorité: 23.09.2022 FR 2209679
(43) Date de publication de la demande: 27.03.2024
(73) Titulaire: AIRBUS OPERATIONS, 31060 Toulouse Cedex 9 (FR)
(72) Inventeur: BERJOT, Michael, 31060 TOULOUSE (FR); GUENEAU, Germain, 31060 TOULOUSE (FR); COMBES, Pierre-Antoine, 31060 TOULOUSE (FR); TAVEAU, Paul-Adrien, 31060 TOULOUSE (FR)
(74) Mandataire: Cabinet Le Guen Maillet

(56) Documents cités:
- EP-A1- 3 792 182
- WO-A1-2013/050714
- WO-A1-2014/036554
- FR-A1- 2 915 177
- FR-A1- 3 093 704

## Description

### DOMAINE TECHNIQUE

La présente invention se rapporte au domaine général de l'accrochage d'une turbomachine sous la voilure d'un aéronef. Elle concerne en particulier un ensemble de motorisation d'aéronef comportant un moteur, un mât sous lequel le moteur est suspendu aux moyens d'attaches moteur et d'un dispositif de reprise d'efforts de poussée générés par le moteur.

### ÉTAT DE LA TECHNIQUE ANTÉRIEURE

On connaît de la demande de brevet EP3792182, un ensemble de motorisation qui comprend à l'avant, en prenant comme référence le sens de déplacement de l'aéronef dans l'air, une attache moteur avant, à l'arrière, une attache moteur arrière, et entre les deux attaches moteur, un dispositif de reprise d'efforts de poussée du moteur.

Le document FR-A-2 915 177 divulgue un ensemble de motorisation de l'état de la technique. En référence avec la Fig. 8, le dispositif de reprise d'efforts de poussée 700 décrit dans la demande susmentionnée comprend deux bielles de reprise de poussée 702 et 704 (thrust link en anglais) disposées de part et d'autre d'un plan vertical médian V de l'ensemble de motorisation et qui ont chacune une extrémité avant attachée au moteur et une extrémité arrière 702a, 704a articulée à une ferrure principale 706 par l'intermédiaire d'un palonnier 708. Le palonnier 708 est monté pivotant sur la ferrure principale 706 selon un axe de rotation R disposé dans le plan vertical médian V et orthogonal à un plan moyen de transmission des efforts de poussée P comprenant les axes longitudinaux des deux bielles 702 et 704. Le palonnier 708 est arrangé entre deux branches 710a-b de la ferrure principale 706, symétriques l'une de l'autre par rapport au plan vertical médian V.

Les deux bielles 702 et 704 sont liées au palonnier 706 par un unique axe de liaison L monté à l'horizontal, qui est disposé dans le plan moyen de transmission des efforts P et orthogonal à l'axe de rotation R. L'axe de liaison L est inséré dans un palier 708a du palonnier 708 et de chaque côté de ce dernier, au travers d'une bague rotulée montée à l'extrémité arrière 702a, 704a de chaque bielle 702, 704. L'axe de liaison L relie mécaniquement d'une part, sans jeu, les bielles 702 et 704 au palonnier 706, et d'autre part, avec jeu, les bielles 702 et 704 à la ferrure principale 706 par l'intermédiaire des deux branches 710a-b de la ferrure principale 706.

Un tel dispositif de reprise d'efforts de poussée 700 est avantageux en ce que le montage des bielles 702 et 704 au moyen d'un axe de liaison L monté à l'horizontal permet d'optimiser la compacité ainsi que l'accès aux opérateurs par les côtés gauche et droit de l'ensemble de motorisation.

En revanche, la conception d'un tel dispositif de reprise d'efforts de poussée 700 engendre des efforts hors plan dirigés vers les côtés et l'extérieur du dispositif (efforts selon les flèches U) à chaque interface d'une bielle 702, 704 avec le palonnier 708, ce qui peut, à terme, provoquer une usure prématurée des bagues rotulées.

Par conséquent, il existe un besoin de modifier la conception du dispositif de reprise d'efforts tel que décrit ci-dessus pour pallier cet inconvénient, tout en conservant un montage des bielles pour un axe de liaison monté à l'horizontal et en garantissant des chemins secondaires d'efforts en cas de rupture d'un composant.

### EXPOSÉ DE L'INVENTION

Un objet de la présente invention est de proposer un ensemble de motorisation d'aéronef comportant un moteur, un mât sous lequel le moteur est suspendu aux moyens d'attaches moteur et d'un dispositif de reprise d'efforts de poussée générés par le moteur.

À cet effet, est proposé un ensemble de motorisation d'un aéronef, ledit ensemble de motorisation présentant un plan vertical médian et comportant :
- une turbomachine,
- un mât,
- à l'avant, une attache moteur avant fixant la turbomachine au mât,
- à l'arrière, une attache moteur arrière fixant la turbomachine au mât, et
- un dispositif de reprise d'effort de poussée comportant :
- une ferrure principale fixée sous le mât,
- un palonnier monté pivotant sur la ferrure principale autour d'un axe principal et présentant un perçage,
- deux bielles de reprise des efforts de poussées du moteur disposées de part et d'autre du plan vertical médian, chaque bielle présente une extrémité avant articulée à la turbomachine et une extrémité arrière articulée au palonnier, où chaque bielle présente un axe longitudinal, où les deux axes longitudinaux définissent un plan moyen de transmission des efforts de poussée, où l'axe principal est orthogonal au plan moyen de transmission des efforts de poussée et compris dans le plan vertical médian, où l'extrémité arrière de chaque bielle est articulée au palonnier autour d'un axe de liaison avant parallèle à l'axe principal et où les deux axes de liaison avant sont symétriques par rapport au plan vertical médian,
- une ferrure secondaire fixée sous le mât en avant de la ferrure principale et présentant une chape femelle secondaire constituée de deux branches secondaires, chacune étant traversée par un trou de forme oblongue où les deux trous sont alignés selon un axe secondaire inclus dans le plan moyen de transmission des efforts de poussée et perpendiculaire au plan vertical médian, et où le grand axe de chaque trou est inclus dans le plan moyen de transmission des efforts de poussée et perpendiculaire à l'axe secondaire, où le palonnier est logé dans la chape femelle secondaire de la ferrure secondaire, où le perçage est coaxial avec l'axe secondaire, et
- un axe de liaison en attente inséré avec un ajustement serré dans le perçage et avec jeu dans les trous.

Avec un tel arrangement, le dispositif de reprise des efforts de poussée est amélioré et présente des chemins secondaires de transfert d'efforts.

Avantageusement, l'attache moteur arrière est articulée à la ferrure principale. Avantageusement, la ferrure principale comprend une bride centrale traversée par un alésage traversant coaxial avec l'axe principal, le palonnier présente une chappe arrière femelle dans laquelle s'introduit la bride centrale, la chape arrière femelle est constituée de deux branches arrière où chacune est traversée par un alésage arrière coaxial avec l'axe principal, le dispositif de reprise d'effort de poussée comporte un axe de liaison arrière emmanché dans l'alésage traversant de la bride centrale et les alésages arrière de la chape arrière femelle, pour chaque bielle, le palonnier présente une chape avant femelle dans laquelle s'introduit l'extrémité arrière de ladite bielle qui est traversée par un alésage traversant coaxial avec l'axe de liaison avant correspondant, chaque chape avant femelle est constituée de deux branches avant où chacune est traversée par un alésage avant coaxial avec l'axe de liaison avant correspondant, et pour chaque bielle, le dispositif de reprise d'efforts de poussée comporte un axe de liaison avant emmanché dans l'alésage traversant de ladite bielle et dans les alésages avant de la chape avant femelle.

Avantageusement, le palonnier comporte un corps et deux flancs, le corps est traversé par le perçage et comporte les branches arrière et les branches avant, chaque flanc est en appui extérieur contre une branche arrière et une branche avant de chaque chape avant femelle, pour chaque alésage arrière, le flanc accolé à la branche arrière correspondant audit alésage arrière est traversé par un alésage secondaire arrière coaxial avec ledit alésage arrière, l'axe de liaison arrière traverse également les alésages secondaires arrière des flancs, pour chaque alésage avant d'une chape avant femelle, le flanc accolé à la branche avant correspondant audit alésage avant est traversé par un alésage secondaire avant coaxial avec ledit alésage avant et l'axe de liaison avant traverse également les alésages secondaires avant des flancs. L'invention propose également un aéronef, une voilure et un ensemble de motorisation selon l'une des variantes précédentes dont le mât est fixé sous la voilure.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 représente une vue de côté d'un aéronef selon l'invention,
Fig. 2 est une vue schématique selon une coupe longitudinale d'un ensemble de motorisation selon l'invention attaché à une aile d'un aéronef,
Fig. 3 est une vue en perspective d'un dispositif de reprise d'efforts de poussée de l'ensemble de motorisation représenté à la Fig.2, selon un premier mode de réalisation de l'invention,
Fig. 4 est une vue éclatée et en perspective du dispositif de reprise d'efforts de poussée de la Fig.3,
Fig. 5 est une vue en perspective d'un dispositif de reprise d'efforts de poussée de l'ensemble de motorisation représenté à la Fig.2, selon un deuxième mode de réalisation de l'invention,
Fig. 6 est une vue en coupe par le plan moyen de transmission des efforts de poussée P du dispositif de reprise d'efforts de poussée de la Fig. 3,
Fig. 7 est une vue éclatée et en perspective d'un palonnier mis en œuvre dans l'invention, et

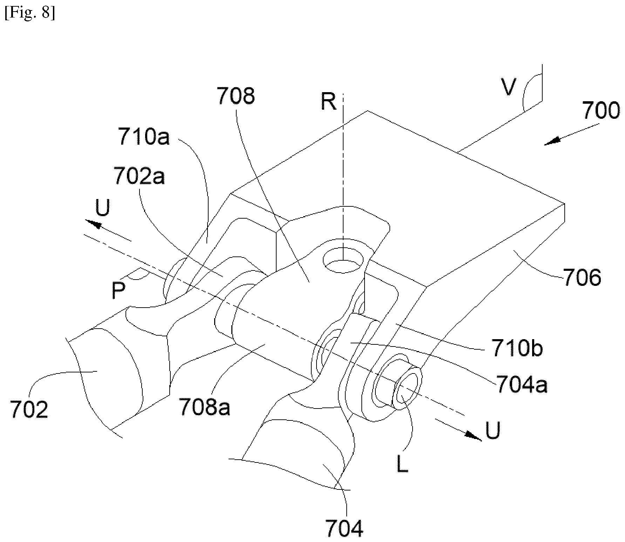

Fig. 8 est une vue en perspective d'un dispositif de reprise d'efforts de poussée de l'état de la technique.

### EXPOSÉ DÉTAILLÉ DE MODES DE RÉALISATION

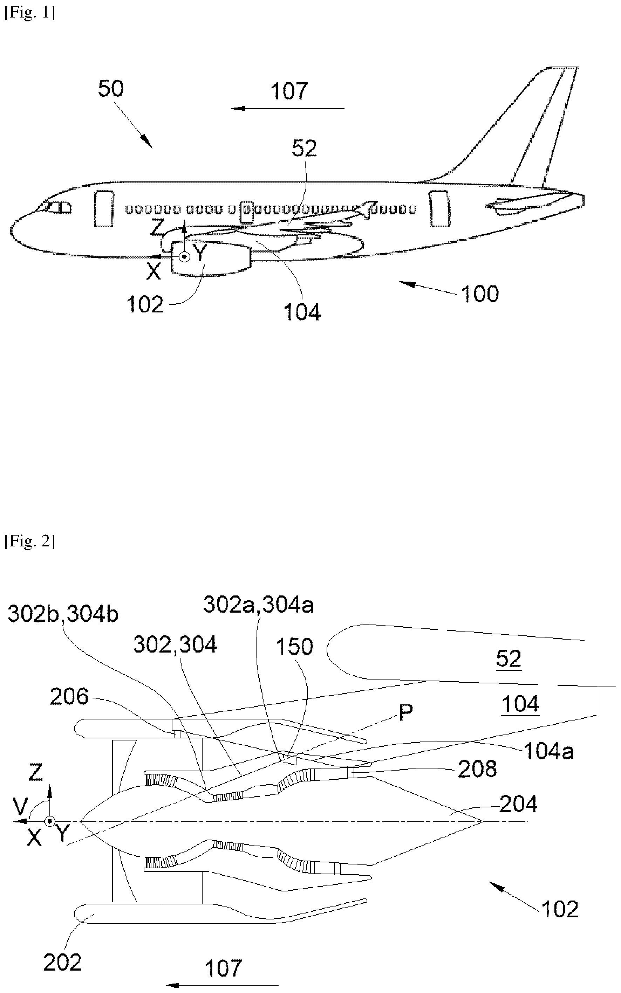

La Fig. 1 montre un aéronef 50 qui présente une voilure 52 sous laquelle est monté un ensemble de motorisation 100 qui comporte une turbomachine 102 et un mât 104.

Par convention, on appelle X la direction longitudinale de la turbomachine 102, cette direction X étant parallèle à un axe longitudinal de la turbomachine 102. On appelle Y la direction transversale de la turbomachine 102 qui est horizontale lorsque l'aéronef est au sol, et Z la direction verticale ou hauteur verticale lorsque l'aéronef est au sol, ces trois directions X, Y et Z étant orthogonales entre elles. L'ensemble de motorisation 100 comporte un plan vertical médian V (XZ) passant par l'axe longitudinal de la turbomachine 102 et orthogonal au sol et qui divise l'ensemble de motorisation 100 en deux parties gauche et droite globalement symétriques l'une de l'autre.

Les termes " avant " et " arrière " sont à considérer par rapport à une direction d'avancement de l'aéronef 50 sous l'effet de la poussée fournie par la turbomachine 102 en fonctionnement, cette direction étant représentée schématiquement par la flèche 107.

La Fig. 2 montre l'ensemble de motorisation 100 qui comporte la turbomachine 102 et le mât 104 par lequel la turbomachine 102 est fixée sous la voilure 52. La turbomachine 102 comporte une nacelle 202 qui entoure un moteur 204 suspendu au mât 104. Le moteur 204 s'étend d'avant en arrière selon l'axe longitudinal de la turbomachine 102 et le mât 104 présente une face inférieure 104a plane et orientée vers le sol.

La fixation du moteur 204 au mât 104 est assurée par un ensemble d'attaches moteur, fixées, d'une part, au mât 104 et, d'autre part, au moteur 204. Ces attaches moteur comprennent à l'avant, une attache moteur avant 206, à l'arrière, une attache moteur arrière 208, et entre les attaches moteur avant et arrière, un dispositif de reprise d'efforts de poussée 150. Les attaches moteur avant 206 et arrière 208 ne seront pas détaillées plus avant.

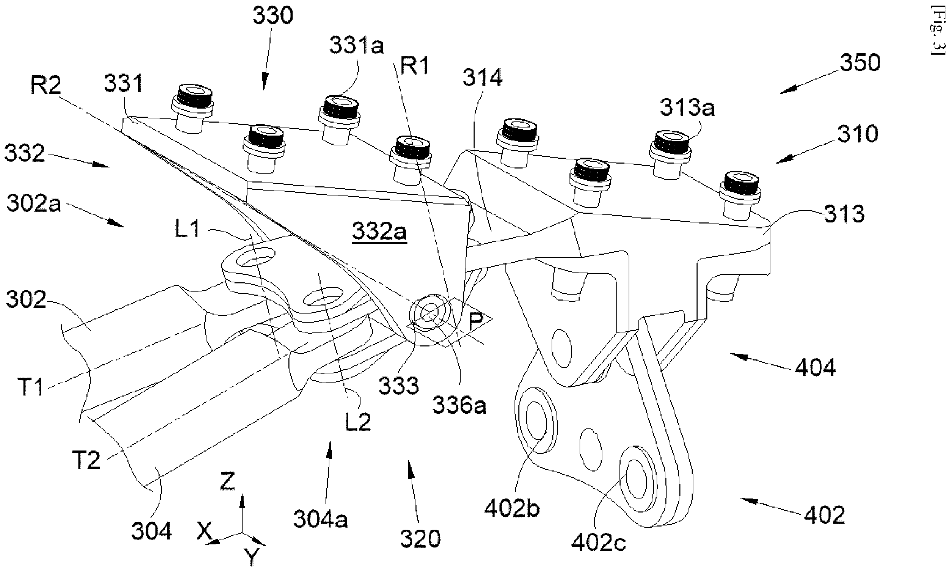

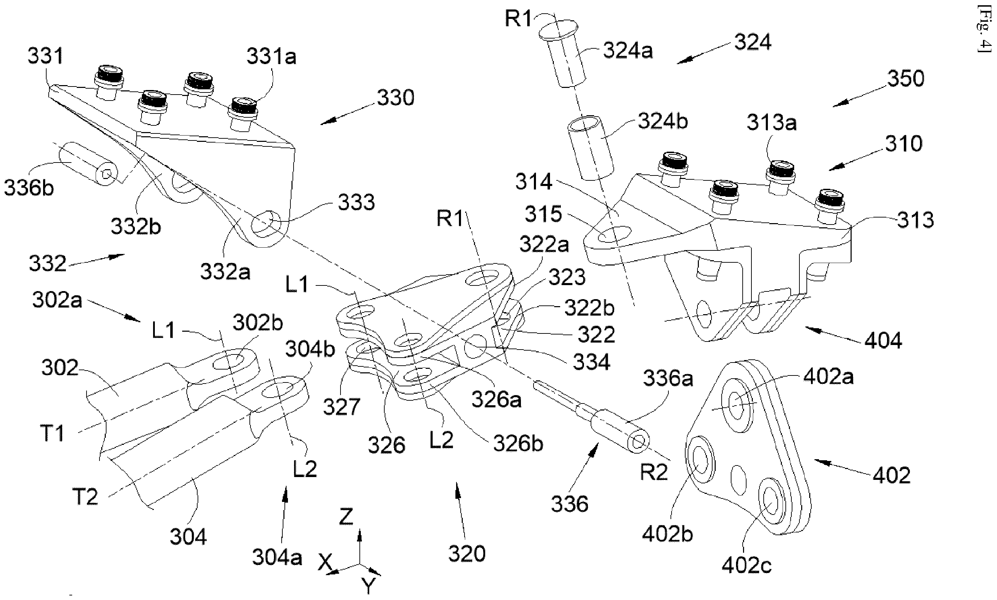

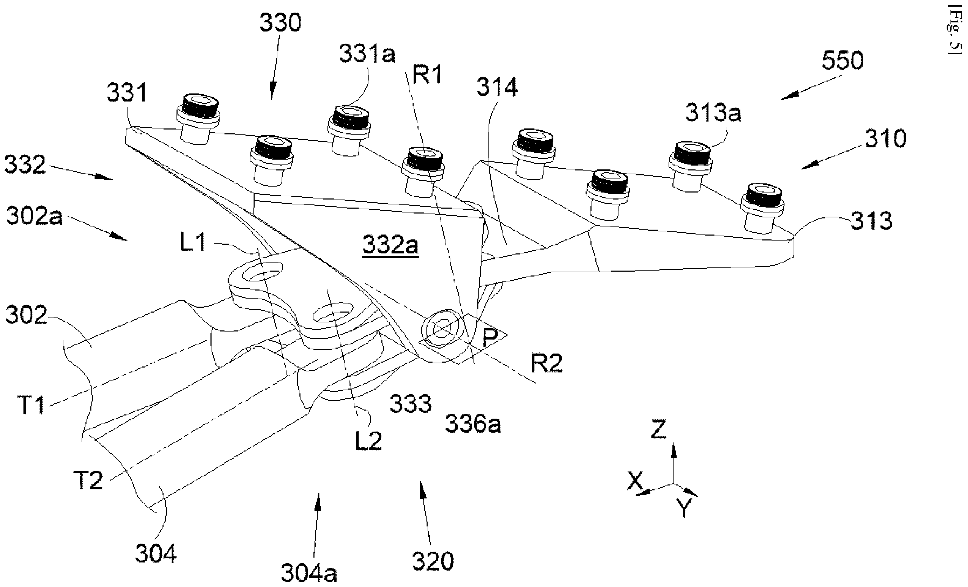

Les Figs. 3 et 4 montrent un dispositif de reprise d'efforts de poussée 350 selon un premier mode de réalisation de l'invention et la Fig. 5 montre un dispositif de reprise d'efforts de poussée 550 selon un deuxième mode de réalisation de l'invention.

Le dispositif de reprise d'efforts de poussée 350, 550 comporte une ferrure principale 310 fixée à la face inférieure 104a du mât 104, un palonnier 320 monté pivotant sur la ferrure principale 310, et deux bielles 302 et 304 de reprise des efforts de poussées du moteur disposées de part et d'autre du plan vertical médian V et articulées au palonnier 320.

La ferrure principale 310 comprend une semelle plane 313 plaquée contre la face inférieure 104a du mât 104. La fixation de la ferrure principale 310 au mât 104 s'effectue, par exemple, par l'utilisation de quatre vis de traction 313a au travers d'alésages traversants prévus à cet effet dans la semelle 313.

Chaque bielle 302, 304 présente une extrémité avant 302b, 304b articulée au moteur 204 de la turbomachine 102 et une extrémité arrière 302a, 304a articulée au palonnier 320, et s'étend longitudinalement selon un axe longitudinal T1, T2, dit axe de transmission d'efforts. Les deux axes de transmissions d'efforts T1, T2 sont inclinés par rapport à l'horizontale et se rapprochent l'un de l'autre dans une direction allant de l'avant vers l'arrière de l'ensemble de motorisation 100 (en d'autres termes, les axes T1, T2 sont convergents dans une direction allant de l'avant vers l'arrière de l'ensemble de motorisation 100). Le plan contenant les deux axes de transmission d'efforts T1 et T2 est appelé le plan moyen de transmission des efforts de poussée P. Chaque bielle 302, 304 progresse du bas vers le haut en allant de l'avant vers l'arrière de l'ensemble de motorisation 100.

Le palonnier 320 est lié à la ferrure principale 310 par un point de liaison arrière constituant une rotation autour d'un axe de rotation R1, dit axe principal, orthogonal au plan moyen de transmission des efforts de poussée P et compris dans le plan vertical médian V.

Dans le mode de réalisation de l'invention présenté ici, le point de liaison arrière est réalisé entre une bride centrale 314 de la ferrure principale 310 et une chape arrière femelle 322 du palonnier 320.

La bride centrale 314 est arrangée à l'avant de la ferrure principale 310 et est solidaire de la semelle plane 313 et s'étend vers l'avant, parallèlement au plan moyen de transmission des efforts de poussée P. Un alésage traversant 315 est réalisé dans la bride centrale 314, et son axe d'alésage est coaxial avec l'axe principal R1.

La chape arrière femelle 322 dans laquelle s'introduit la bride centrale 314 est arrangée à l'arrière du palonnier 320. La chape arrière femelle 322 est constituée de deux branches arrière 322a-b parallèles entre elles et perpendiculaires à l'axe principal R1, et chaque branche arrière 322a-b est traversée par un alésage arrière 323 dont l'axe est coaxial avec l'axe principal R1.

Le dispositif de reprise d'efforts de poussée 350, 550 comporte un axe de liaison arrière 324. L'introduction de la bride centrale 314 dans la chape arrière femelle 322 et l'emmanchement de l'axe de liaison arrière 324 dans l'alésage traversant 315 de la bride centrale 314 et les alésages arrière 323 de la chape arrière femelle 322 réalisent la liaison pivot autour de l'axe principal R1. Dans le mode de réalisation de l'invention présenté ici, l'axe de liaison 324 comporte un axe 324a et un palier 324b dans lequel ledit axe 324a est inséré et où ledit palier 324b est inséré avec un ajustement serré dans l'alésage traversant 315 de la bride centrale 314 et dans les alésages arrière 323 de la chape arrière femelle 322.

L'extrémité arrière 302a,304a de chaque bielle 302, 304 est articulée au palonnier 320 par un point de liaison avant constituant une rotation autour d'un premier axe de liaison avant L1 pour une bielle 302 et autour d'un deuxième axe de liaison avant L2 pour l'autre bielle 304. Les deux axes de liaison avant L1, L2 s'étendent parallèlement à l'axe principal R1 et symétriquement de part et d'autre du plan vertical médian V.

Dans le mode de réalisation de l'invention présenté ici, chaque point de liaison avant est réalisé entre l'extrémité arrière 302a, 304a de la bielle 302, 304 correspondante et une chape avant femelle 326 du palonnier 320.

Chaque chape avant femelle 326 dans laquelle s'introduit l'extrémité arrière 302a, 304a d'une bielle 302, 304 est arrangée à l'avant du palonnier 320.

L'extrémité arrière 302a, 304a de chaque bielle 302, 304 est traversée par un alésage traversant 302b, 304b dont l'axe est coaxial avec l'axe de liaison avant L1, L2 correspondant. Chaque chape avant femelle 326 est constituée de deux branches avant 326a-b parallèles entre elles et perpendiculaires à l'axe de liaison avant L1, L2, et chaque branche avant 326a-b est traversée par un alésage avant 327 dont l'axe est coaxial avec l'axe de liaison avant L1, L2 correspondant.

Le dispositif de reprise d'efforts de poussée 350, 550 comporte un axe de liaison avant (non représenté).

L'introduction de l'extrémité arrière 302a, 304a d'une bielle 302, 304 dans une chape avant femelle 326 et l'emmanchement de l'axe de liaison avant dans l'alésage traversant 302b, 304b de la bielle 302, 304 et dans les alésages avant 327 de la chape avant femelle 326 réalisent la liaison pivot autour de l'axe de liaison avant L1, L2. Préférentiellement, chaque extrémité arrière 302a, 304a est montée de manière rotulée sur l'axe de liaison avant par l'intermédiaire d'une bague rotulée insérée dans l'alésage traversant 302b, 304b de la bielle 302, 304 correspondante et où l'axe de liaison est inséré sans jeu dans la bague rotulée et les alésages avant 327 de la chape avant femelle 326.

Un chemin primaire de transfert d'efforts est ainsi créé entre les bielles 302 et 304 et la ferrure principale 310 à travers le palonnier 320 et en particulier à travers les différentes chapes femelle avant 326 et arrière 322 et les axes de liaison correspondants.

Le dispositif de reprise d'efforts de poussée 350, 550 comporte une ferrure secondaire 330 fixée à la face inférieure 104a du mât 104 en avant de la ferrure principale 310. La ferrure secondaire 330 comprend une semelle plane 331 plaquée contre la face inférieure 104a du mât 104. La fixation de la ferrure secondaire 330 au mât 104 s'effectue, par exemple, par l'utilisation de quatre vis de traction 331a au travers d'alésages traversants prévus à cet effet dans la semelle 331.

La palonnier 320 est articulé à la ferrure secondaire 330.

La ferrure secondaire 330 comporte également une chape femelle secondaire 332 constituée de deux branches secondaires 332a-b, chacune étant traversée par un trou 333 de forme oblongue. Les deux trous 333 sont alignés selon un axe R2, dit axe secondaire, qui est inclus dans le plan moyen de transmission des efforts de poussée P et perpendiculaire au plan vertical médian V, c'est-à-dire ici orienté parallèlement à la direction transversale Y et horizontalement.

Le grand axe de chaque trou 333 est inclus dans le plan moyen de transmission des efforts de poussée P et perpendiculaire à l'axe secondaire R2.

Le palonnier 320 est traversé par un perçage 334 cylindrique coaxial avec l'axe secondaire R2 et le palonnier 320 s'insère dans la chape femelle secondaire 332 de la ferrure secondaire 330 de manière à aligner les trous 333 et le perçage 334 afin d'y loger un axe de liaison secondaire 336 cylindrique. L'axe de liaison secondaire 336 est dit en attente ( « waiting fail-safe » en langue anglo-saxonne) qui est activée dans le cas d'une défaillance du chemin primaire. L'axe de liaison en attente 336 est inséré avec un ajustement serré dans le perçage 334 et avec jeu dans les trous 333.

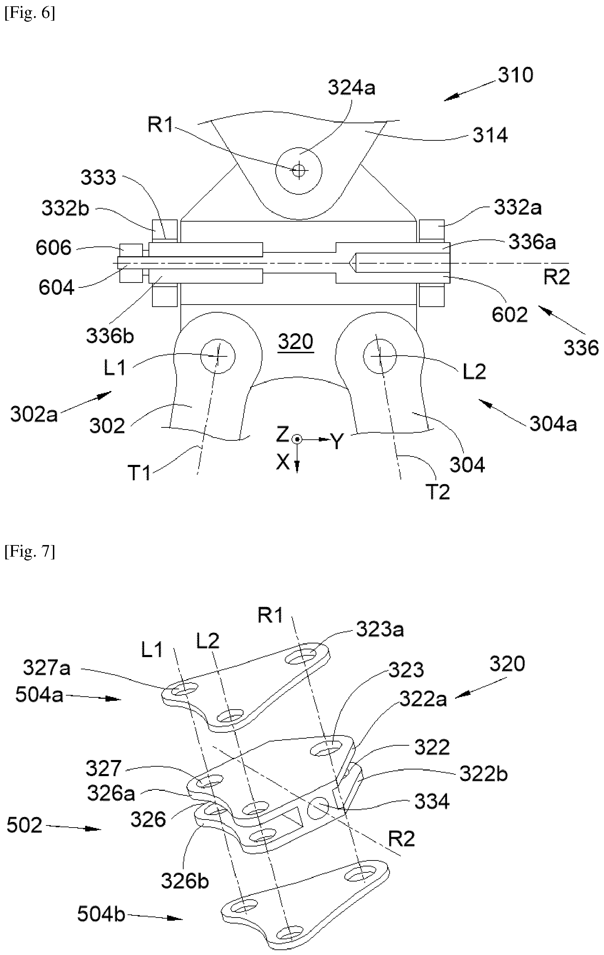

La Fig. 6 montre une coupe en position de fonctionnement normal, c'est-à-dire lorsque le chemin primaire est intact. En cas de rupture du chemin primaire au niveau de la liaison autour de l'axe principal R1 (de la bride centrale 314 ou de l'axe de liaison arrière 324) ou d'une des bielles 302 et 304, le chemin primaire est alors défaillant et l'axe de liaison en attente 336 et le palonnier 320 vont alors basculer pour amener ledit axe de liaison en attente 336 en contact avec les bords des trous 333 et les efforts vont alors passer par un chemin secondaire de transfert d'efforts jusqu'à la ferrure secondaire 330.

Pour des raisons de montage, l'axe de liaison en attente 336 comporte ici une partie mâle 336a et une partie femelle 336b. La partie mâle 336a présente une première extrémité 602 dont le diamètre est égal au diamètre du perçage 334 et une deuxième extrémité 604 de diamètre réduit et filetée. La partie femelle 336b présente un diamètre extérieur égal au diamètre du perçage 334 et un diamètre intérieur égal au diamètre de la deuxième extrémité 604 pour s'y emmancher. La partie mâle 336a et la partie femelle 336b sont solidarisées par un écrou de serrage 606 qui se visse sur la deuxième extrémité 604.

Dans le mode de réalisation de l'invention représenté à la Fig. 3 et à la Fig. 4, l'attache moteur arrière 208 est articulée à la ferrure principale 310, alors que dans le mode de réalisation de l'invention présenté à la Fig. 4, l'attache moteur arrière 208 est distincte de la ferrure principale 310.

Dans le mode de réalisation de l'invention présenté à la Fig. 3 et à la Fig. 4, l'attache moteur arrière 208 comporte une bielle arrière 404 à trois points dont un point 402a, inclus dans le plan vertical médian V, assure un montage articulé à la ferrure principale 310 et dont deux points 402b-c, symétriques l'un de l'autre par rapport au plan vertical médian V, assurent un montage articulé au moteur 204 de la turbomachine 102. L'axe d'articulation de chaque point 402a-c est globalement parallèle à l'axe longitudinal de la turbomachine 102.

La bielle arrière 402 est montée articulée dans une chape arrière 404 prévue sous la semelle 313 de la ferrure principale 310.

Selon un mode de réalisation particulier de l'invention, le palonnier 320 est constitué de trois éléments qui sont montrés en détail et en vue éclatée à la Fig. 7.

Le palonnier 320 comporte un corps 502 et deux flancs 504a-b accolés au corps 502 de part et d'autre du corps 502 par rapport au plan moyen de transmission des efforts de poussée P, c'est-à-dire qu'ici, il y a un flanc 504a au-dessus du corps 502 et un flanc 504b au-dessous du corps 502.

Le corps 502 est traversé par le perçage 334 et il comporte les branches arrière 322a-b pour former la chape arrière femelle 322 et les branches avant 326a-b pour former les deux chapes avant femelle 326. Chaque flanc 504a-b est en appui extérieur contre une branche arrière 322a-b de la chape arrière femelle 322 et une branche avant 326a-b de chaque chape avant femelle 326.

Pour chaque alésage arrière 323 de la chape arrière femelle 322 coaxial avec l'axe principal R1, le flanc 504a-b accolé à la branche arrière 322a-b correspondant audit alésage arrière 323 est traversé par un alésage secondaire arrière 323a coaxial avec ledit alésage arrière 323. L'axe de liaison arrière 324 traverse également les alésages secondaires arrière 323a des flancs 504a-b. Les flancs 504a-b sont pris en sandwich entre les extrémités de l'axe de liaison arrière 324.

De la même manière, pour chaque alésage avant 327 d'une chape avant femelle 326 coaxial avec un axe de liaison avant L1, L2, le flanc 504a-b accolé à la branche avant 326a-b correspondant audit alésage avant 327 est traversé par un alésage secondaire avant 327a coaxial avec ledit alésage avant 327. L'axe de liaison avant correspondant traverse également les alésages secondaires avant 327a des flancs 504a-b. Les flancs 504a-b sont pris en sandwich entre les extrémités de chaque axe de liaison avant.

Ainsi, en cas de défaillance au niveau du corps 502, et en particulier au niveau d'une chape femelle 322, 326, les flancs 504a-b prennent le relais et constituent un chemin secondaire de transfert d'efforts par rapport au corps 502 qui constitue le chemin primaire de transfert d'efforts.

## Revendications

1. Ensemble de motorisation (100) d'un aéronef (50), ledit ensemble de motorisation (100) présentant un plan vertical médian (V) et comportant :
- une turbomachine (102),
- un mât (104),
- à l'avant, une attache moteur avant (206) fixant la turbomachine (102) au mât (104),
- à l'arrière, une attache moteur arrière (208) fixant la turbomachine (102) au mât (104), et
- un dispositif de reprise d'efforts de poussée (150, 350, 550) comportant :
- une ferrure principale (310) fixée sous le mât (104),
- un palonnier (320) monté pivotant sur la ferrure principale (310) autour d'un axe principal (R1) et présentant un perçage (334),
- deux bielles (302, 304) de reprise des efforts de poussées du moteur disposées de part et d'autre du plan vertical médian (V), chaque bielle (302, 304) présentant une extrémité avant (302b, 304b) articulée à la turbomachine (102) et une extrémité arrière (302a, 304a) articulée au palonnier (320), où chaque bielle (302, 304) présente un axe longitudinal (T1, T2), où les deux axes longitudinaux (T1, T2) définissent un plan moyen de transmission des efforts de poussée (P), où l'axe principal (R1) est orthogonal au plan moyen de transmission des efforts de poussée (P) et compris dans le plan vertical médian (V), où l'extrémité arrière (302a, 304a) de chaque bielle (302, 304) est articulée au palonnier (320) autour d'un axe de liaison avant (L1, L2) parallèle à l'axe principal (R1) et où les deux axes de liaison avant (L1, L2) sont symétriques par rapport au plan vertical médian (V),
- une ferrure secondaire (330) fixée sous le mât (104) en avant de la ferrure principale (310) et présentant une chape femelle secondaire (332) constituée de deux branches secondaire (332a-b), chacune étant traversée par un trou (333) de forme oblongue où les deux trous (333) sont alignés selon un axe secondaire (R2) inclus dans le plan moyen de transmission des efforts de poussée (P) et perpendiculaire au plan vertical médian (V), et où le grand axe de chaque trou (333) est inclus dans le plan moyen de transmission des efforts de poussée (P) et perpendiculaire à l'axe secondaire (R2), où le palonnier (320) est logé dans la chape femelle secondaire (332) de la ferrure secondaire (330), où le perçage (334) est coaxial avec l'axe secondaire (R2), et
- un axe de liaison en attente (336) inséré avec un ajustement serré dans le perçage (334) et avec jeu dans les trous (333).

2. Ensemble de motorisation (100) selon la revendication 1, **caractérisé en ce que** l'attache moteur arrière (208) est articulée à la ferrure principale (310).

3. Ensemble de motorisation (100) selon l'une des revendications 1 ou 2, **caractérisé en ce que** la ferrure principale (310) comprend une bride centrale (314) traversée par un alésage traversant (315) coaxial avec l'axe principal (R1), **en ce que** le palonnier (320) présente une chappe arrière femelle (322) dans laquelle s'introduit la bride centrale (314), **en ce que** la chape arrière femelle (322) est constituée de deux branches arrière (322a-b) où chacune est traversée par un alésage arrière (323) coaxial avec l'axe principal (R1), **en ce que** le dispositif de reprise d'efforts de poussée (350, 550) comporte un axe de liaison arrière (324) emmanché dans l'alésage traversant (315) de la bride centrale (314) et les alésages arrière (323) de la chape arrière femelle (322), **en ce que**, pour chaque bielle (302, 304), le palonnier (320) présente une chape avant femelle (326) dans laquelle s'introduit l'extrémité arrière (302a, 304a) de ladite bielle (302, 304) qui est traversée par un alésage traversant (302b, 304b) coaxial avec l'axe de liaison avant (L1, L2) correspondant, **en ce que** chaque chape avant femelle (326) est constituée de deux branches avant (326a-b) où chacune est traversée par un alésage avant (327) coaxial avec l'axe de liaison avant (L1, L2) correspondant, et **en ce que** pour chaque bielle (302, 304), le dispositif de reprise d'efforts de poussée (350, 550) comporte un axe de liaison avant emmanché dans l'alésage traversant (302b, 304b) de ladite bielle (302, 304) et dans les alésages avant (327) de la chape avant femelle (326).

4. Ensemble de motorisation (100) selon la revendication 3, **caractérisé en ce que** le palonnier (320) comporte un corps (502) et deux flancs (504a-b), **en ce que** le corps (502) est traversé par le perçage (334) et comporte les branches arrière (322a-b) et les branches avant (326a-b), **en ce que** chaque flanc (504a-b) est en appui extérieur contre une branche arrière (322a-b) et une branche avant (326a-b) de chaque chape avant femelle (326), **en ce que** pour chaque alésage arrière (323), le flanc (504a-b) accolé à la branche arrière (322a-b) correspondant audit alésage arrière (323) est traversé par un alésage secondaire arrière (323a) coaxial avec ledit alésage arrière (323), **en ce que** l'axe de liaison arrière (324) traverse également les alésages secondaires arrière (323a) des flancs (504a-b), **en ce que** pour chaque alésage avant (327) d'une chape avant femelle (326), le flanc (504a-b) accolé à la branche avant (326a-b) correspondant audit alésage avant (327) est traversé par un alésage secondaire avant (327a) coaxial avec ledit alésage avant (327) et **en ce que** l'axe de liaison avant traverse également les alésages secondaires avant (327a) des flancs (504a-b).

5. Aéronef (50) comportant une voilure (52) et un ensemble de motorisation (100) selon l'une des revendications précédentes dont le mât (104) est fixé sous la voilure (52).

## Patentansprüche

1. Motorisierungseinheit (100) eines Flugzeugs (50), wobei die Motorisierungseinheit (100) eine vertikale Mittelebene (V) aufweist und Folgendes umfasst:
- ein Turbotriebwerk (102),
- einen Pylon (104),
- an der Vorderseite eine vordere Motorbefestigung (206), die das Triebwerk (102) an dem Pylon (104) befestigt,
- an der Hinterseite eine hintere Motorbefestigung (208), die das Triebwerk (102) an dem Pylon (104) befestigt, und
- eine Schubkräfteaufnahmevorrichtung (150, 350, 550), die Folgendes umfasst:
- einen Hauptbeschlag (310), der unter dem Pylon (104) befestigt ist,
- eine Traverse (320), die um eine Hauptachse (R1) schwenkbar an dem Hauptbeschlag (310) montiert ist und eine Bohrung (334) aufweist,
- zwei Stangen (302, 304) zur Aufnahme der Schubkräfte des Motors, die auf beiden Seiten der vertikalen Mittelebene (V) angeordnet sind, wobei jede Stange (302, 304) ein vorderes Ende (302b, 304b), das an dem Triebwerk (102) angelenkt ist, und ein hinteres Ende (302a, 304a), das an der Traverse (320) angelenkt ist, aufweist, wobei jede Stange (302, 304) eine Längsachse (T1, T2) aufweist, wobei die zwei Längsachsen (T1, T2) eine mittlere Schubkräfteübertragungsebene (P) definieren, wobei die Hauptachse (R1) zu der mittleren Schubkräfteübertragungsebene (P) orthogonal ist und in der vertikalen Mittelebene (V) enthalten ist, wobei das hintere Ende (302a, 304a) jeder Stange (302, 304) um eine vordere Verbindungsachse (L1, L2) parallel zu der Hauptachse (R1) an der Traverse (320) angelenkt ist und wobei die zwei vorderen Verbindungsachsen (L1, L2) mit Bezug auf die vertikale Mittelebene (V) symmetrisch sind,
- einen Sekundärbeschlag (330), der unter dem Pylon (104) vor dem Hauptbeschlag (310) befestigt ist und einen sekundären Gabelkopf (332) aufweist, der aus zwei sekundären Armen (332a-b) besteht, von denen jeder von einem Loch (333) mit länglicher Form durchquert wird, wobei die zwei Löcher (333) nach einer sekundären Achse (R2) ausgerichtet sind, die in der mittleren Schubkräfteübertragungsebene (P) enthalten und senkrecht zu der vertikalen Mittelebene (V) ist, und wobei die Hauptachse jedes Lochs (333) in der mittleren Schubkräfteübertragungsebene (P) enthalten und zu der sekundären Achse (R2) senkrecht ist, wobei die Traverse (320) in dem sekundären Gabelkopf (332) des sekundären Beschlags (330) aufgenommen ist, wobei die Bohrung (334) zu der sekundären Achse (R2) koaxial ist, und
- eine Ersatzverbindungsachse (336), die mit einem Presssitz in die Bohrung (334) und mit Spiel in die Löcher (333) eingeführt ist.

2. Motorisierungseinheit (100) nach Anspruch 1, **dadurch gekennzeichnet, dass** die hintere Motorbefestigung (208) an dem Hauptbeschlag (310) angelenkt ist.

3. Motorisierungseinheit (100) nach einem der Ansprüche 1 oder 2, **dadurch gekennzeichnet, dass** der Hauptbeschlag (310) einen mittleren Flansch (314) beinhaltet, der von einer Durchgangsbohrung (315), die zu der Hauptachse (R1) koaxial ist, durchquert wird, dass die Traverse (320) einen hinteren Gabelkopf (322) aufweist, in den der mittlere Flansch (314) eingeführt wird, dass der hintere Gabelkopf (322) aus zwei hinteren Armen (322a-b) besteht, von denen jeder von einer hinteren Bohrung (323), die zu der Hauptachse (R1) koaxial ist, durchquert wird, dass die Schubkräfteaufnahmevorrichtung (350, 550) eine hintere Verbindungsachse (324) umfasst, die in die Durchgangsbohrung (315) des mittleren Flansches (314) und die hinteren Bohrungen (323) des hinteren Gabelkopfes (322) eingesteckt wird, dass die Traverse (320) für jede Stange (302, 304) einen vorderen Gabelkopf (326) aufweist, in den das hintere Ende (302a, 304a) der Stange (302, 304), das von einer Durchgangsbohrung (302b, 304b), die zu der entsprechenden vorderen Verbindungsachse (L1, L2) koaxial ist, durchquert wird, eingeführt wird, dass jeder vordere Gabelkopf (326) aus zwei vorderen Armen (326a-b) besteht, von denen jeder von einer vorderen Bohrung (327), die zu der entsprechenden vorderen Verbindungachse (L1, L2) koaxial ist, durchquert wird, und dass die Schubkräfteaufnahmevorrichtung (350, 550) für jede Stange (302, 304) eine vordere Verbindungsachse umfasst, die in die Durchgangsbohrung (302b, 304b) der Stange (302, 304) und in die vorderen Bohrungen (327) des vorderen Gabelkopfes (326) eingesteckt wird.

4. Motorisierungseinheit (100) nach Anspruch 3, **dadurch gekennzeichnet, dass** die Traverse (320) einen Körper (502) und zwei Seitenteile (504a-b) umfasst, dass der Körper (502) von der Bohrung (334) durchquert wird und die hinteren Arme (322a-b) und die vorderen Arme (326a-b) umfasst, dass jedes Seitenteil (504a-b) außen an einem hinteren Arm (322a-b) und einem vorderen Arm (326a-b) jedes vorderen Gabelkopfes (326) anliegt, dass, für jede hintere Bohrung (323), das Seitenteil (504a-b), das an den hinteren Arm (322a-b), der der hinteren Bohrung (323) entspricht, angefügt ist, von einer hinteren sekundären Bohrung (323a) durchquert wird, die zu der hinteren Bohrung (323) koaxial ist, dass die hintere Verbindungsachse (324) ebenfalls die hinteren sekundären Bohrungen (323a) der Seitenteile (504a-b) durchquert, dass, für jede vordere Bohrung (327) eines vorderen Gabelkopfes (326), das Seitenteil (504a-b), das an den vorderen Arm (326a-b), der der vorderen Bohrung (327) entspricht, angefügt ist, von einer vorderen sekundären Bohrung (327a) durchquert wird, die zu der vorderen Bohrung (327) koaxial ist, und dass die vordere Verbindungsachse ebenfalls die vorderen sekundären Bohrungen (327a) der Seitenteile (504a-b) durchquert.

5. Flugzeug (50), umfassend eine Tragfläche (52) und eine Motorisierungseinheit (100) nach einem der vorhergehenden Ansprüche, deren Pylon (104) unter der Tragfläche (52) befestigt ist.

## Claims

1. Propulsion assembly (100) for an aircraft (50), said propulsion assembly (100) having a median vertical plane (V) and having:
- a turbomachine (102),
- a pylon (104),
- at the front, a front engine attachment (206) fastening the turbomachine (102) to the pylon (104),
- at the rear, a rear engine attachment (208) fastening the turbomachine (102) to the pylon (104), and
- a device for reacting thrust forces (150, 350, 550) having:
- a main fitting (310) fastened beneath the pylon (104),
- a spreader (320) mounted so as to be able to pivot on the main fitting (310) about a main axis (R1) and having an opening (334),
- two rods (302, 304) for reacting the thrust forces of the engine that are disposed on either side of the median vertical plane (V), each rod (302, 304) having a front end (302b, 304b) articulated to the turbomachine (102) and a rear end (302a, 304a) articulated to the spreader (320), wherein each rod (302, 304) has a longitudinal axis (T1, T2), wherein the two longitudinal axes (T1, T2) define a mean plane for transmission of the thrust forces (P), wherein the main axis (R1) is orthogonal to the mean plane for transmission of the thrust forces (P) and comprised in the median vertical plane (V), wherein the rear end (302a, 304a) of each rod (302, 304) is articulated to the spreader (320) about a front connection axis (L1, L2) parallel to the main axis (R1) and wherein the two front connection axes (L1, L2) are symmetrical with respect to the median vertical plane (V),
- a secondary fitting (330) fastened beneath the pylon (104) in front of the main fitting (310) and having a secondary female clevis (332) constituted of two secondary arms (332a-b), each one being passed through by a hole (333) of oblong shape wherein the two holes (333) are aligned along a secondary axis (R2) included in the mean plane for transmission of the thrust forces (P) and perpendicular to the median vertical plane (V), and wherein the major axis of each hole (333) is included in the mean plane for transmission of the thrust forces (P) and perpendicular to the secondary axis (R2), wherein the spreader (320) is housed in the secondary female clevis (332) of the secondary fitting (330), wherein the opening (334) is coaxial with the secondary axis (R2), and
- a backup connection pin (336) inserted with a tight fit into the opening (334) and with clearance into the holes (333).

2. Propulsion assembly (100) according to Claim 1, **characterized in that** the rear engine attachment (208) is articulated to the main fitting (310).

3. Propulsion assembly (100) according to either of Claims 1 and 2, **characterized in that** the main fitting (310) comprises a central flange (314) passed through by a through-bore (315) coaxial with the main axis (R1), **in that** the spreader (320) has a female rear clevis (322) into which the central flange (314) is introduced, **in that** the female rear clevis (322) is constituted of two rear arms (322a-b) wherein each one is passed through by a rear bore (323) coaxial with the main axis (R1), **in that** the device for reacting thrust forces (350, 550) has a rear connection pin (324) fitted in the through-bore (315) of the central flange (314) and the rear bores (323) of the female rear clevis (322), **in that**, for each rod (302, 304), the spreader (320) has a female front clevis (326) into which the rear end (302a, 304a) of said rod (302, 304), which is passed through by a through-bore (302b, 304b) coaxial with the corresponding front connection axis (L1, L2) is introduced, **in that** each female front clevis (326) is constituted of two front arms (326a-b) wherein each one is passed through by a front bore (327) coaxial with the corresponding front connection axis (L1, L2), and **in that** for each rod (302, 304), the device for reacting thrust forces (350, 550) has a front connection pin fitted in the through-bore (302b, 304b) of said rod (302, 304) and in the front bores (327) of the female front clevis (326).

4. Propulsion assembly (100) according to Claim 3, **characterized in that** the spreader (320) has a body (502) and two flanks (504a-b), **in that** the body (502) is passed through by the opening (334) and has the rear arms (322a-b) and the front arms (326a-b), **in that** each flank (504a-b) bears externally against a rear arm (322a-b) and a front arm (326a-b) of each female front clevis (326), **in that** for each rear bore (323), the flank (504a-b) adjoining the rear arm (322a-b) corresponding to said rear bore (323) is passed through by a rear secondary bore (323a) coaxial with said rear bore (323), **in that** the rear connection pin (324) also passes through the rear secondary bores (323a) of the flanks (504a-b), **in that** for each front bore (327) of a female front clevis (326), the flank (504a-b) adjoining the front arm (326a-b) corresponding to said front bore (327) is passed through by a front secondary bore (327a) coaxial with said front bore (327) and **in that** the front connection pin also passes through the front secondary bores (327a) of the flanks (504a-b).

5. Aircraft (50) having a wing (52) and a propulsion assembly (100) according to one of the preceding claims, of which the pylon (104) is fastened beneath the wing (52).
